# EUROPÄISCHE PATENTSCHRIFT

(11) **EP 0 985 336 B1**
(45) Veröffentlichungstag und Bekanntmachung des Hinweises auf die Patenterteilung: **12.04.2006**
(21) Anmeldenummer: 99116328.8
(22) Anmeldetag: 19.08.1999
(51) Int. Cl.: A01B 51/02

(54) **Selbstfahrende landwirtschaftliche Erntemaschine**
Autonomous agricultural harvesting machine
Machine agricole autonome de récolte

(30) Priorität: 12.09.1998 DE 19841746
(43) Veröffentlichungstag der Anmeldung: 15.03.2000
(73) Patentinhaber: CLAAS Selbstfahrende Erntemaschinen GmbH, 33428 Harsewinkel (DE)
(72) Erfinder: Renger, Hermann, 33129 Delbrück (DE)

(56) Entgegenhaltungen:
- DE-C- 874 997
- FR-A- 2 317 872
- FR-A- 2 632 265
- US-A- 4 193 612
- US-A- 5 411 287

## Beschreibung

Die Erfindung betrifft eine selbstfahrende landwirtschaftliche Arbeitsmaschine mit einer angetriebenen Vorder- und gegebenenfalls ebenfalls antreibbaren Hinterachse, deren Rahmen über ein Knickgelenk miteinander verbunden sind und die Hinterachse über ein in Fahrzeuglenksachse verlaufendes Längslager verschwenkbar ist.

Eine derartige landwirtschaftliche Arbeitsmaschine ist aus dem Dokument FR-A-2 632 265 bekannt. Dabei ist die hintere Radachse über einen horizontalen Fahrzeuglängsachse sich erstreckenden Bolzen mit dem hinteren Rahmen freischwenkbar verbunden, um sich Geländeunebenheiten anpassen zu können. Um zu verhindern, daß die Arbeitsmaschine insbesondere bei großem Lenkeinschlag (ca. 45 °) in unebenem Gelände kippt, kann die Radachse zusätzlich über Druckfedern und gegebenenfalls diesen Druckfedern zugeordnete Stoßdämpfer mit dem hinteren Rahmen verbunden. Durch diese Anordnung wird der Schwenkwinkel der Radachse begrenzt und ein notwendiges Rückstellmoment gewährleistet. Sie arbeitet an sich zufriedenstellend, ist andererseits aber sehr kostenaufwendig und erfordert einen großen Bauraum sowie einen hohen Pflege- und Montageaufwand.

Der vorliegenden Erfindung liegt daher die Aufgabe zugrunde, eine Arbeitsmaschine der eingangs näher bezeichneten Art zu schaffen, die die an sie zu stellenden Anforderungen insbesondere mit Hinblick auf eine robuste und einfache Ausführung in zufriedenstellender Weise löst.

Diese Aufgabe wird dadurch gelöst, daß der Rahmen der Hinterachse zweigeteilt ist und beide Rahmenteile über ein in Längsrichtung der Fahrzeugmittenachse verlaufendes Achslager miteinanderverbunden sind, wobei das Achslager als ein drehwinkelbegrenzendes Lager ausgebildet ist. Ein so ausgebildetes Lager ersetzt aufgrund seiner Drehwinkelbegrenzung die bei landwirtschaftlichen Arbeitsmaschinen bisher erforderlichen zusätzlichen Druckfedern und Stoßdämpfer.

Auf konstruktiv einfache Art und Weise ist der Hinterachsrahmen zweigeteilt und bereichsweise übereinander angeordnet, wobei zumindest ein Achsrahmenteil über mindestens ein drehwinkelbegrenzendes Federelement mit der Achse des Achslagers verbunden ist.

Weitere vorteilhafte Ausführungsformen des Erfindungsgegenstandes ergeben sich aus den Merkmalen der Unteransprüche.

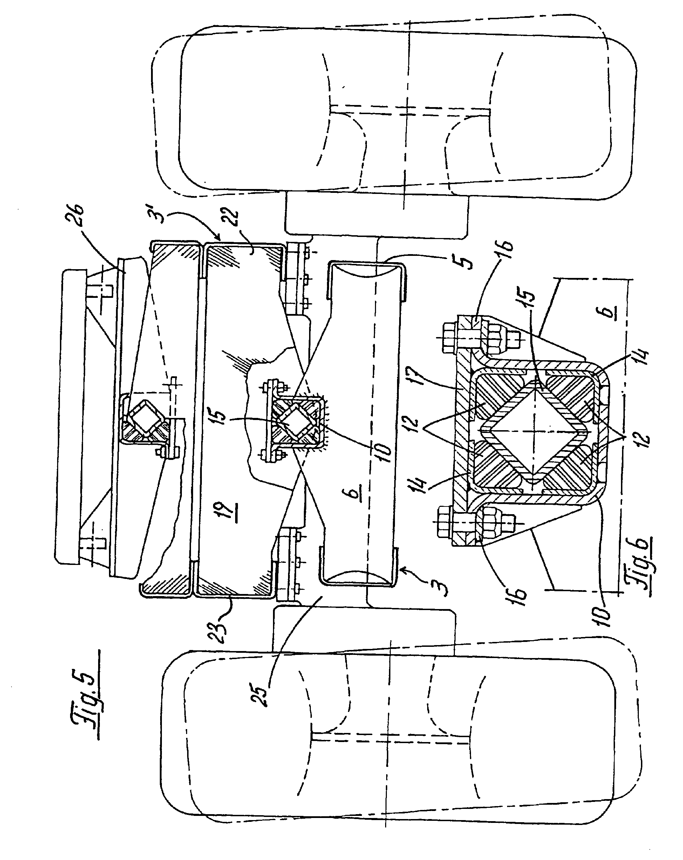

Im Folgenden soll die Erfindung anhand eines Ausführungsbeispieles und mehrerer dieser schematisch darstellenden Figuren näher erläutert werden.
Dabei zeigt:

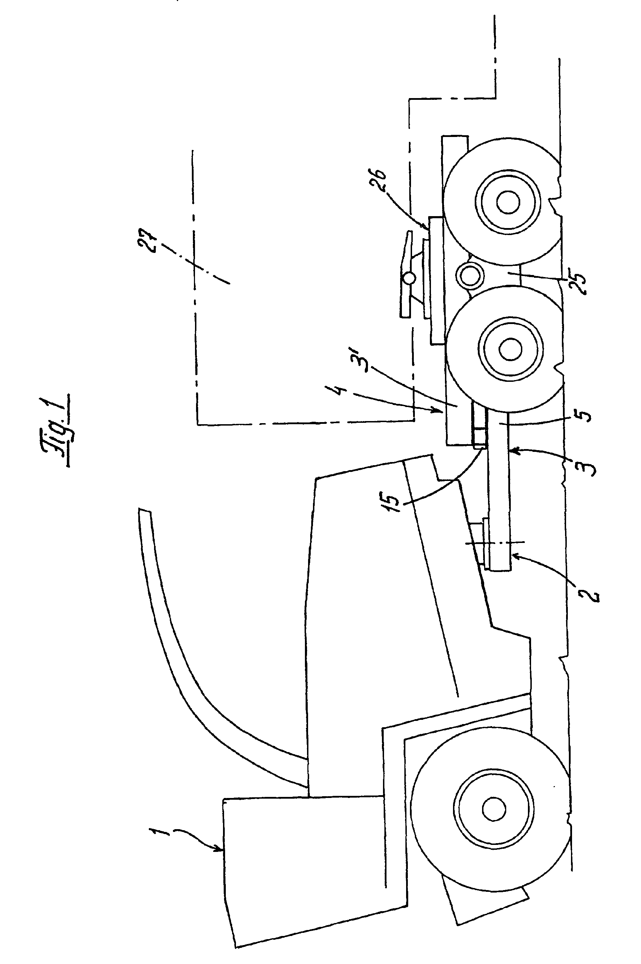

Fig. 1 einen Feldhäcksler mit angekuppeltem Anhängerfahrzeug,

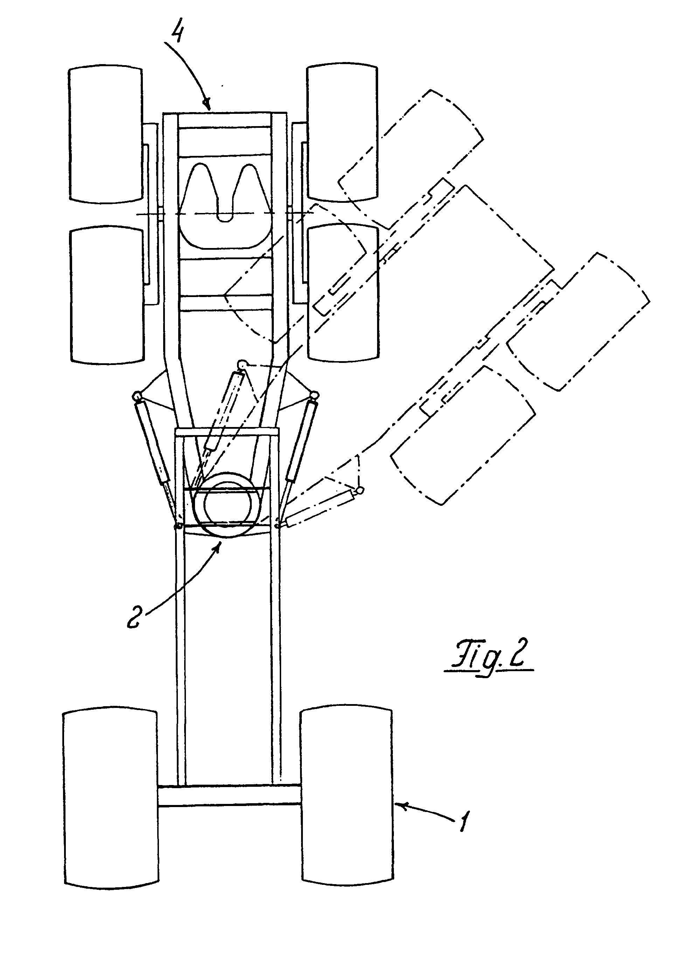

Fig. 2 den in Fig. 1 dargestellten Häcksler mit Anhängerfahrzeug in der Draufsicht,

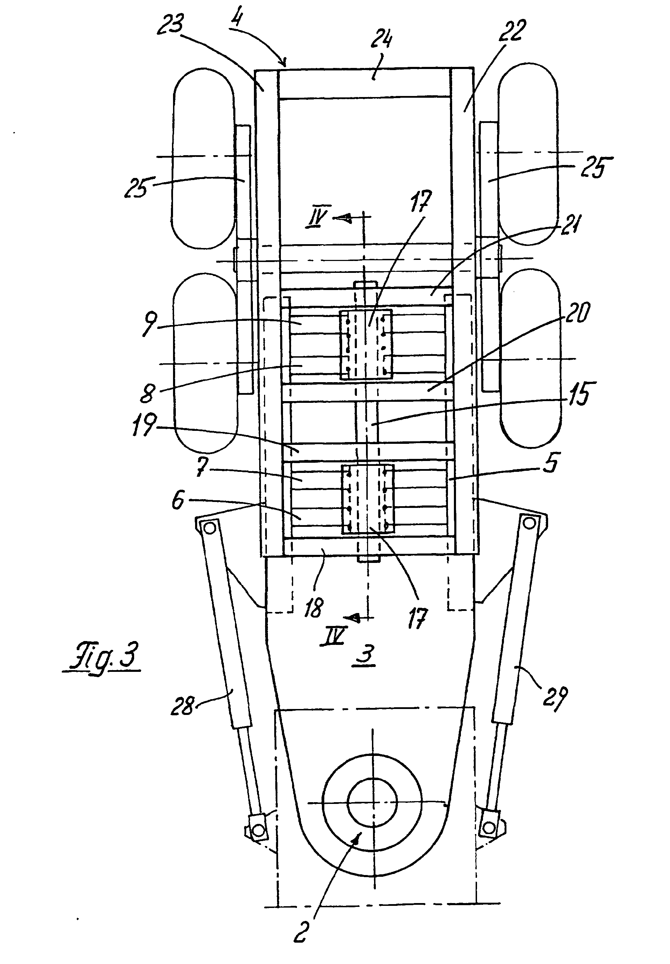

Fig. 3 den Tragrahmen des Anhängerfahrzeugs mit Pendelachse in der Draufsicht,
Fig. 4 den in Fig. 3 dargestellten Tragrahmen vergrößert im Teilschnitt nach der Linie IV -
IV der Fig. 3
Fig. 5 den Tragrahmen des Anhängerfahrzeugs gemäß der Schnittlinie V aus Fig. 4.
Fig. 6 in vergrößerter Schnittdarstellung das Achslager 10

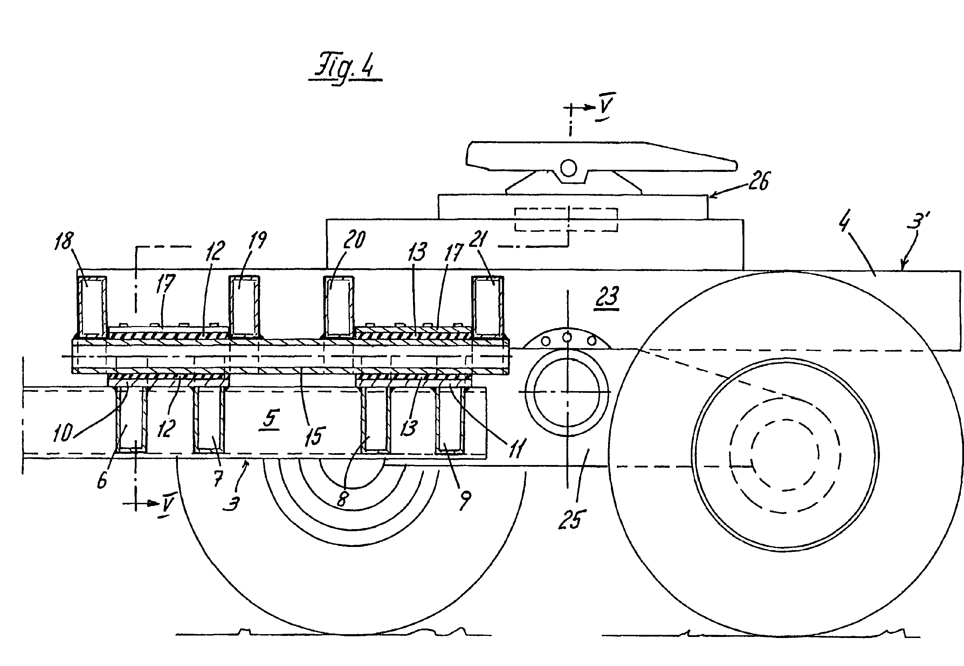

Mit 1 ist ein selbstfahrender Feldhäcksler bezeichnet, dessen Lenkachse demontiert ist. Anstatt der demontierten Lenkachse ist mit dem Feldhäcksler über ein Knickgelenk 2 der untere Teil 3 eines Hinterachsrahmens 4 verbunden. Der untere Teilrahmen 3 weist neben Längsträgern 5 vier Quertraversen 6 - 9 auf. Mit je zwei Quertraversen 6, 7 bzw. 8, 9 ist je ein kanalförmig verlaufendes oben offenes Gehäuse 10, 11 fest verschweißt. Die kanalförmigen Gehäuse 10 und 11 verlaufen in der in Längsrichtung verlaufenden Fahrzeugmittenachse. In jedem der Gehäuse 10 bzw. 11 sind vier Gummistränge 12 und 13 unter Zwischenschaltung von Winkelprofilen 14 gelagert, die mit ihren Innenseiten an der Achse 15 anliegen, welche einen viereckigen Querschnitt aufweist. Jedes kanalförmig verlaufende Gehäuse weist nach außen abgewinkelte Kragen 16 auf, mit denen jeweils ein Deckel 17 fest verschraubt ist. Über diese beiden Deckel 17 werden die Gummistränge 12,13 mit definierter Vorspannung gegen die Achse 15 gepreßt. Die Achse 15 ist, wie insbesondere die Fig. 4 zeigt, mittig mit vier Quertraversen 18 bis 21 verschweißt, die gemeinsam mit Seitenteilen 22 und 23 sowie einer hinteren Abschlussquertraverse 24 einen oberen Teilrahmen 3' bilden. Dieser obere Teilrahmen 3' nimmt sowohl eine angetriebene Tandempendelachse 25 auf, wie auch einen Kupplungskopf 26, beispielsweise für einen Auflieger 27. Der Lenkeinschlag des Feldhäckslers 1 gegenüber dem Hinterachsrahmen 4 geschieht über 2 hydraulische Kolbenzylindereinheiten 28 und 29 in bekannter Art und Weise.

## Patentansprüche

1. Selbstfahrende landwirtschaftliche Arbeitsmaschine mit einer angetriebenen Vorder- und gegebenenfalls ebenfalls antreibbaren Hinterachse, deren rahmen über ein Knickgelenk miteinander verbunden ist,
**dadurch gekennzeichnet,**
**dass** der Hinterachsrahmen (4) zweigeteilt ist und beide Teile (3, 3') über ein in Längsrichtung der Fahrzeugmittenachse verlaufendes Achslager (10 bis 17) miteinander verbunden sind, wobei das Achslager als drehwinkelbegrenzendes Lager ausgebildet ist.

2. Selbstfahrende landwirtschaftliche Arbeitsmaschine nach Anspruch 1,
**dadurch gekennzeichnet,**
**daß** der Hinterachsrahmen (4) zweigeteilt und bereichsweise übereinander angeordnet ist und zumindest ein Achsrahmenteil 3 über zumindest ein drehwinkelbegrenzendes Federelement (12,13) mit der Achse (15) des Achslagers (10 bis 17) verbunden ist.

3. Selbstfahrende landwirtschaftliche Arbeitsmaschine nach mindestens einem der Ansprüche 1 oder 2,
**dadurch gekennzeichnet,**
**daß** die Achse (15) mit zumindest einer Quertraverse eines Teilrahmens (3) fest verbunden ist und über das mindestens einen Drehwinkel begrenzende Federelement an zumindest einer Quertraverse des anderen Teilrahmens (3) befestigt ist.

4. Selbstfahrende landwirtschaftliche Arbeitsmaschine nach einem oder mehreren der Ansprüche 2 bis 3,
**dadurch gekennzeichnet,**
**daß** das mindestens einen Drehwinkel begrenzende Federelement ein Strang (12) aus elastischem Material ist, der mit der Innenseite an der Schwenkachse fest anliegt und mit der Außenseite von einem Gehäuse gehalten wird, das mindestens mit einer Quertraverse fest verbunden ist.

5. Selbstfahrende landwirtschaftliche Arbeitsmaschine nach Anspruch 4,
**dadurch gekennzeichnet,**
**daß** die Achse (15) einen viereckigen Querschnitt aufweist, an dessen Flächen je ein Strang (12) anliegt, die über ein Gehäuse (10 bzw. 11) an die Außenflächen der Achse (15) gepresst werden.

6. Selbstfahrende landwirtschaftliche Arbeitsmaschine nach den Ansprüchen 4 und 5,
**dadurch gekennzeichnet,**
**daß** das Gehäuse (10 bzw. 11) kanalförmig ausgebildet ist und einen U-förmigen Querschnitt hat, dessen freiauslaufende Schenkel je einen nach außen aufweisenden Kragen (16) aufweist, mit dem ein das kanalförmige Gehäuse (10 bzw. 11) schließender Deckel (17) verschraubbar ist.

7. Selbstfahrende landwirtschaftliche Arbeitsmaschine nach den Ansprüchen 4 bis 6,
**dadurch gekennzeichnet,**
**daß** das kanalförmige Gehäuse (10 beziehungsweise 11) mit mindestens einer Traverse (6,7 beziehungsweise 8,9) eines Rahmenteils (3) verschweißt ist.

8. Selbstfahrende landwirtschaftliche Arbeitsmaschine nach den Ansprüchen 4 bis 7,
**dadurch gekennzeichnet,**
**daß** die Stränge (12) unter Zwischenschaltung von Winkelprofilstücken (14) im Gehäuse (10 beziehungsweise 11) gehalten sind.

## Revendications

1. Machine agricole automotrice de récolte avec un essieu avant moteur, et éventuellement également un essieu arrière moteur, ces essieux ayant leur châssis relié par une articulation, **caractérisée en ce que** le châssis d'essieu arrière (4) est divisé en deux parties (3, 3') qui sont reliées entre elles par un palier d'essieu (10 à 17) disposé selon la direction longitudinale de l'axe médian du véhicule, ce palier étant un palier de limitation de l'angle de basculement.

2. Machine agricole automotrice de récolte, selon la revendication 1, **caractérisée en ce que** le châssis d'essieu arrière (4) est divisé en deux parties disposées dans certaines zones l'une au-dessus de l'autre, et au moins une partie de châssis d'essieu (3) est reliée à l'axe (15) du palier d'essieu (10 à 17) par au moins un élément élastique limitant l'angle de rotation.

3. Machine agricole automotrice de récolte selon la revendication 1 ou 2, **caractérisée en ce que** l'axe (15) est solidaire d'au moins une traverse d'une partie de cadre (3) et il est fixé à au moins une traverse de l'autre partie de châssis (3') par l'élément élastique au nombre d'un au moins qui limite l'angle de basculement.

4. Machine agricole automotrice de récolte selon les revendications 2 et/ou 3, **caractérisée en ce que** l'élément élastique limitant au moins un angle de basculement est une barre (12) en matériau élastique et qui est appliquée par sa face interne sur l'essieu basculant, tandis que par sa face arrière il est maintenu par un boîtier qui est solidaire au moins d'une traverse.

5. Machine agricole automotrice de récolte selon la revendication 4, **caractérisée en ce que** l'essieu (15) présente une section quadrangulaire sur chacune des faces de laquelle est appliquée une barre (12) qui est comprimée sur ces faces externes par un boîtier (10,11).

6. Machine agricole automotrice de récolte selon les revendications 4 et 5, **caractérisée en ce que** le boîtier (10 ; 11) a la forme d'un canal dont la section est en forme d'U et dont les ailes libres présentent chacune un collet (16) dirigé vers l'extérieur et auquel le couvercle (17) fermant le boîtier (10 ; 11) en forme de canal peut être fixé par des vis.

7. Machine agricole automotrice de récolte selon les revendications 4 à 6, **caractérisée en ce que** chaque boîtier en forme de canal (10 ; 11) est relié par soudage à au moins une traverse (6, 7 ; 8, 9) d'une partie de châssis (3).

8. Machine agricole automotrice de récolte selon les revendications 4 à 7, **caractérisée en ce que** les barres (12) sont maintenues dans le boîtier (10 ; 11) avec interposition de cornières (14).

## Claims

1. A self-propelled agricultural machine having a driven front axle, and possibly also a drivable rear axle, the frames of which are connected together by means of a toggle link,
**characterised in that**
the rear axle frame (4) is in two parts, and both parts (3; 3') are connected together by an axle bearing (10 to 17) which extends in the longitudinal direction of the central axis of the vehicle, wherein the axle bearing is in the form of a bearing which restricts the angle of rotation.

2. A self-propelled agricultural machine according to claim 1,
**characterised in that**
the rear axle frame (4) is in two parts and is arranged in regionally superposed relationship, and at least one axle frame part 3 is connected to the axle (15) of the axle bearing (10 to 17) by means of at least one spring member (12, 13) which restricts the angle of rotation.

3. A self-propelled agricultural machine according to at least one of claims 1 or 2,
**characterised in that**
the axle (15) is fixedly connected to at least one transverse cross-member of a frame part (3), and is fixed to at least one transverse cross-member of the other frame part (3) by way of the at least one spring member which restricts the angle of rotation.

4. A self-propelled agricultural machine according to one or more of claims 2 to 3,
**characterised in that** the at least one spring member which restricts the angle of rotation is a strip (12) of elastic material, the inside of which rests firmly against the pivot axis, and the outside of which is held by a housing which is fixedly connected at least to one transverse cross-member.

5. A self-propelled agricultural machine according to claim 4,
**characterised in that**
the axle (15) is of a quadrangular cross-section, against each of the faces of which lies a strip (12), the strips being pressed by way of a housing (10 or 11) against the outer faces of the axle (15).

6. A self-propelled agricultural machine according to claims 4 and 5,
**characterised in that**
the housing (10 or 11) is of a channel-like configuration and is of a U-shaped cross-section, each of the freely emerging limbs of which has an outwardly pointing collar (16) to which a cover (17) which closes the channel-like housing (10 and 11) can be screwed.

7. A self-propelled agricultural machine according to one of claims 4 to 6,
**characterised in that**
the channel-like housing (10 or 11) is welded to at least one cross-member (6, 7 or 8, 9) of a frame part (3).

8. A self-propelled agricultural machine according to claims 4 to 7,
**characterised in that**
the strips (12) are held in the housing (10 or 11) through the intermediary of angle section pieces (14).
